# EUROPÄISCHE PATENTSCHRIFT

(11) **EP 1 311 166 B1**
(45) Veröffentlichungstag und Bekanntmachung des Hinweises auf die Patenterteilung: **13.09.2006**
(21) Anmeldenummer: 01957679.2
(22) Anmeldetag: 20.08.2001
(51) Int. Cl.: A23L 1/10

(54) **VERFAHREN ZUR GEWINNUNG VON ALEURON AUS KLEIE**
METHOD FOR THE EXTRACTION OF ALEURONE FROM BRAN
PROCEDE POUR EXTRAIRE L'ALEURONE DU SON

(30) Priorität: 21.08.2000 DE 10041156; 28.08.2000 DE 10042188
(43) Veröffentlichungstag der Anmeldung: 21.05.2003
(73) Patentinhaber: Bühler AG, 9240 Uzwil (CH)
(72) Erfinder: BOHM, Arturo, CH-9242 Oberuzwil (CH); BOGONI, Carlo, CH-8406 Winterthur (CH); BEHRENS, Raimund, 78462 Konstanz (DE); OTTO, Thomas, 78465 Konstanz (DE)
(74) Vertreter: Frommhold, Joachim
(86) Internationale Anmeldenummer: PCT/CH2001/000506
(87) Internationale Veröffentlichungsnummer: WO 2002/015711

(56) Entgegenhaltungen:
- EP-A- 0 810 031
- DE-C- 3 921 023
- US-A- 4 746 073
- SAUNDERS R.M. ET AL.: "Enzymatic Processing of Wheat Bran: Effects on Nutrient Availibility" CEREAL CHEMISTRY, Bd. 49, Nr. 4, 1972, Seiten 436-442, XP001053445 St. Paul, Minnesota, US
- PATENT ABSTRACTS OF JAPAN vol. 013, no. 510 (C-654), 15. November 1989 (1989-11-15) & JP 01 206962 A (NISSHIN FLOUR MILLING CO LTD), 21. August 1989 (1989-08-21)
- AL-SUAIDY ET AL.: "Effects of Certain Biochemical Treatments on Milling and Baking Properties of Hard Red Winter Wheat" CEREAL SCIENCE TODAY, Bd. 18, Nr. 6, Juni 1973 (1973-06), Seiten 174-179, XP001053428 St. Paul, Minnesota, US

## Beschreibung

Die Erfindung bezieht sich auf ein Verfahren zur Aufbereitung von Kleie, insbesondere Weizenkleie, zur Gewinnung von Aleuronzellen, insbesondere des Weizenkorns. Ausserdem bezieht sie sich auf die Verwendung der durch das erfindungsgemässe Verfahren abgetrennten bzw. isolierten Aleuronbestandteile als Beimischung in Nahrungsmitteln, in Futtermitteln oder als Nahrungsergänzungsmittel oder als Futterergänzungsmittel. Des weiteren bezieht sie sich auf aleuronhaltige Produkte und insbesondere auf aleuronhaltige funktionelle Lebensmittel.

Das Weizenkorn kann in drei Hauptbestandteile eingeteilt werden, nämlich Schale, Mehlkörper und Keimling. Die Schale selbst besteht aus einer Vielzahl fein differenzierter Schichten, die sich ebenfalls in drei Gruppen unterteilen lassen:
Fruchtschale (Oberhaut, Längszellen, Querzellen, Schlauchzellen)
Samenschale (Farbstoffschicht, farblose Schicht)
Aleuronschicht

Die Aleuronzellschicht des Weizens ist eine einreihige Schicht, die aus dickwandigen Zellen besteht und deren Inhalt ernährungsphysiologisch sehr bedeutungsvoll ist. Die Aleuronzellen enthalten u.a. Vitamine, Mineralien, Fette, Eiweiss, Phosphor und Ballaststoffe (Zellwand). Die Aleuronschicht ist die äusserste Randschicht des Mehlkörpers und gehört botanisch gesehen somit zum Mehlkörper und nicht zur Schale. Der Zusammenhalt zwischen der Aleuronzellenschicht, der sehr dünnen hyalinen Schicht und der Samenschale durch sehr starke Adhäsionskräfte zeigt sich besonders in der mechanischen Trennung von Mehlkörper und Schale (Ausstreifen der Kleie). Vom müllereitechnischen Standpunkt gehört die Aleuronzellschicht deshalb mit zur Kleie bzw. Schale, die dann als Speise- oder Futterkleie weitere Verwendung findet.

Der Mehlkörper eines Getreidekorns und insbesondere eines Weizenkorns ist von vielschichtigen Schalen umgeben. Aussen befindet sich die Fruchtschale, bestehend aus Oberhaut, Querzellen und Schlauchzellen. In Richtung Mehlkörper folgt die Samenhaut und auf diese folgen nach einer Hyalinschicht die Aleuronzellen, die ernährungsphysiologisch interessant sind. Diese Aleuronzellen enthalten viele Mineralien, Vitamine und Ballaststoffe und sind, geschützt durch Fruchtschale und Samenhaut nur gering schadstoffbelastet.

Kann die Fruchtschale noch relativ einfach von der Samenhaut getrennt werden, so ist es sehr kompliziert, die Aleuronzellen von der Samenhaut zu trennen. Deshalb wird zumeist die gesamte Kleie einer Verwendung als Futtermittel oder Speisekleie zugeführt. Hierzu erfolgt zum Beispiel eine hydro-thermische Stabilisierung, zum Beispiel gemäss der DE-A-4435453, um eine lagerfähige Kleie zu erhalten.

Bekannt ist es auch gemäss der japanischen Offenlegung Nr. 11103803, eine oxidationsbeständige Reiskleie zu erzeugen, indem diese aus dem Waschwasser nach der Reisbearbeitung (Polieren) gewonnen wird. Hierzu wird dem Waschwasser zunächst ein Agens zugesetzt und nachfolgend wird das Wasser mittels Wärmeeinwirkung entfernt, wobei zugleich grössere Kleiepartikel gebildet werden. Auch hierbei bleibt die Kleie als Ganzes erhalten.

Die US-5082680 beschreibt ein aufwändiges mechanisches Verfahren zur schichtweisen Ablösung von Kleie. Hierbei wird unter Nutzung von vier Polier- bzw. Scheuerstufen und einer Bürststufe bei zweimaliger Netzung die Kleie schichtweise entfernt. Auf eine erste Netzung des gereinigten, trockenen Weizens folgt ein Abstehen. In einem ersten Polierschritt wird nachfolgend die Oberhaut der Fruchtschale entfernt. Nach einer zweiten Netzung werden in einem zweiten Polierschritt Querzellen und Schlauchzellen der Fruchtschale entfernt. Diese Kleieschichten werden gesichtet, um Keime und Kornbruch zu trennen. Wegen des angenommenen, geringen Gehaltes an Phytatphosphor sollen diese gesichteten Kleieschichten als Nahrungszusatz Verwendung finden. In einem dritten Polierschritt werden die Samenhaut und Teile der Hyalinschicht sowie Aleuronzellen entfernt. In einem vierten Polierschritt wird neben verbliebener Samenhaut vor allem die Aleuronschicht entfernt. Diese wird als nicht weiter verarbeitungswürdig angesehen. Während eines abschliessenden Bürstens werden noch anhaftende Kleiereste und Keime entfernt, worauf ein Kühlen, Netzen und Abstehen folgt. Dieser Stand der Technik gibt zwar allgemeine Hinweise zur teilweisen Verwendung von Kleie, bietet jedoch keine Lösung für ein gezieltes Entfemen und eine Verwendung von Aleuronzellen.

Die DE-39 21 023 offenbart ein Nahrungsmittel aus einer Getreidekorn-Siebfraktion von 150 bis 500 *µm,* die zumindest 50 Gewichtsprozent aus Aleuronschicht besteht, wobei die Aleuronschicht durch Ankeimung im enzymaktivierten Zustand vorliegt. Zur Gewinnung der Aleuronschicht wird das Getreide mit erwärmtem Wasser angefeuchtet und dann stehen gelassen. Anschliessend wird die Schale durch Schälen oder Bürsten abgetragen und das aus dem Endosperm und der Aleuronschicht bestehende Korn gemahlen, woraufhin die Aleuronschicht von den Endospermteilchen abgetrennt wird. Man geht aber nicht von handelsüblicher Kleie aus, und die Ablösung der Aleuronzellen erfolgt nicht durch Zusatz von Enzymen.

Die EP-0 810 031 offenbart einen Vorbehandlungsprozess bei einem Weizenmahlverfahren. Hierbei werden rohe Weizenkörner zunächst in mehreren Schritten poliert, wobei nach und nach die äusseren Schichten des Weizenkorns (Pericarp, Samenschale) abgetragen werden. Im letzten Polierschritt wird der äussere Teil der aus einer einzigen Zellschicht bestehenden Aleuronschicht durch Polieren entfernt, so dass praktisch alle Aleuronzellen aufgehoben werden und ihr Zellinhalt austreten kann. Durch Hinzugeben von Wasser wird das Ausfliessen des Aleuronzelleninhalts begünstigt. Auch hier geht man nicht von Kleie aus, und es erfolgt kein Ablösen der Aleuronzellen bzw. der Aleuronschicht vom Endosperm. Somit erhält man hier einerseits Weizenkörner, die aus Endosperm mit anhaftenden leeren aufgebrochenen Aleuronzellen bestehen und andererseits ausgelaufenen Aleuronzelleninhalt.

Die JP-1 206 962 offenbart ein Verfahren zur Gewinnung einer stark proteinhaltigen Fraktion und einer stark faserhaltigen Fraktion ausgehend von Weizenkleie. Die Kleie wird dabei auf eine Teilchengrösse unter 500 *µ*m pulverisiert, und Teilchen unter 30 µm werden entfernt. Anschliessend soll durch "Gas-Klassifikation" (Windsichtung) eine Fraktion mit Teilchen grösser als 95 µm und in eine Fraktion mit Teilchen kleiner als 95 µm gewonnen werden. Diese beiden Fraktionen werden als die angestrebten Fraktionen bezeichnet. Bei dieser Gas-Klassifikation bzw. Windsichtung ist aber nicht ersichtlich, ob oder ggf. wie alle Schalenteilchen, insbesondere die aus der Furche des Weizenkorns stammenden, von den Aleuronteilchen ausgesondert werden. Es wird explizit betont, dass auch keine anschliessende elektrische Trennung stattfindet. Ausserdem erfolgt die Bearbeitung der Kleie zu deren Zerkleinerung (Pulverisierung) nicht unter vorwiegender Einwirkung von Massenkräften, so dass auch nicht ersichtlich ist, wie eine saubere Abtrennung der Aleuronbestandteile von den Nicht-Aleuronbestandteilen der Kleie erfolgen soll.

Die US-4.746.073 offenbart ein Verfahren zur Gewinnung von Aleuronzellen aus Weizenkleie. Hierbei wird die Weizenkleie in einer Hammermühle zerkleinert, wobei vorwiegend aus Schale und Aleuron bestehende Teilchen im Bereich zwischen 130 und 290 µm entstehen. Teilchen die kleiner als 40 µm, werden dann in einer senkrechten Luftsäule in einem Schacht verwirbelt (Trockenluft- Elutriator), wobei einerseits dieser Feinanteil (kleiner als **4** *µ*m) ausgeblasen wird und andererseits die verbleibenden Teilchen durch tribo-elektrische Aufladung unterschiedlich elektrisch geladen werden sollen. Auch hier dürfte keine besonders stark angereicherte Aleuronfraktion entstehen, da die Kleie durch die Hammermühle aufgrund der starken Biegebeanspruchung der Kleieteilchen zwar zerkleinert wird, aber eben keine schonende Ablösung der Aleuronschicht von der Schale erfolgt. Ausserdem ist zumindest fraglich, wie bei der triboelektrischen Aufladung in dem "Trockenluftstrom-Elutriator" verhindert werden soll, dass der Feinanteil durch elektrostatische Anziehung mit den relativ grossen Teilchen der Fraktion im Bereich von 130 *µ*m bis 290 *µ*m Agglomerate bildet, wodurch eine Aussonderung des Feinanteils durch einen Luftstrom verhindert wird.

In dem Artikel "Enzymatic Processing of Wheat Bran: Effect on Nutrient Availability" von R. M. Sanders et al., American Association of Cereal Chemists, 1972 werden verschiedene handelsübliche zellolytische Enzyme verwendet, um Kleie zu verarbeiten. Durch mehr oder weniger starke enzymatische Schwächung der Zellwände der Aleuronzellen wurde die Verdaubarkeit und der Nährwert von Futterkleie verbessert. Von einer Ablösung der Aleuronzellen von der Schale oder gar einer Isolierung der Aleuronzellen ist aber keine Rede.

Ähnliches gilt für den Artikel "Effects of Certain Biochemical Treatments on Milling and Baking Properties of Hard Red Winter Wheat" von N. A.Suaidy et all. Hier werden Cellulose und Hemicellulose des Weizenkorns durch Cellulose bzw. Hemicellulose behandelt und die Auswirkung dieser Weizenbehandlung auf das Verhalten beim Mahlen des Weizens oder beim späteren Backen mit dem gewonnenen Mehl untersucht. Auch hier ist jedoch die Rede davon, Aleuronzellen von der Schale abzulösen.

Eine Ablösung der Aleuronzellen bzw. der Aleuronschicht von der Schale ist also weder als "Nass-Variante" noch als "Trocken-Variante" im zitierten Stand der Technik offenbart.

Der Erfindung liegt die Aufgabe zu Grunde, die aufgezeigten Nachteile des Stands der Technik zu vermeiden und die physiologisch besonders wertvollen Aleuronbestandteile, insbesondere des Weizenkorns, möglichst vollständig und möglichst schonend aus der sie enthaltenden Kleie zu gewinnen.

Eine weitere Aufgabe besteht darin, die so gewonnenen Aleuronbestandteile der Ernährung des Menschen und des Tiers gezielt zuführbar zu machen und zuzuführen.

Diese Aufgaben werden gelöst, indem man in der Kleie die vorwiegend Aleuron enthaltenden Aleuronbestandteile von den vorwiegend kein Aleuron enthaltenden Nicht-Aleuronbestandteilen ablöst und die Aleuron enthaltenden Bestandteile anschliessend aussondert. Die ausgesonderten Aleuronbestandteile werden dann als Beimischung oder als gesonderte Ergänzung herkömmlichen Nahrungsmitteln zugeführt.

Die Ablösung der Kleie kann biochemisch-enzymatisch oder mechanisch-abrasiv oder durch eine Kombination aus biochemischer-enzymatischer und mechanisch-abrasiver Behandlung erfolgen.

Bei der biochemischen, enzymatischen Behandlung wird die Kleie in einem mit Wasser gefüllten Behälter bei einer für Enzyme optimalen Temperatur und optimalem pH-Wert unter Zusatz einer Enzyme aufweisenden biochemisch aktiven Substanz geführt, so dass die Adhäsionskräfte zwischen der Aleuronzellenschicht und der braunen Samenschale durch die Enzyme derart geschwächt werden, dass durch eine geringe mechanische Einwirkung die Aleuronzellverbände unversehrt von der Samenschale abgelöst werden können.

Zweckmässigerweise wird die Kleie vorab auf eine Grösse von 400-800µm zerkleinert, wobei die Kleie auch vorzugsweise von noch anhaftendem Endosperm befreit wird.

Bevorzugterweise werden die Aleuronzellverbände durch geringe mechanische Einwirkung unversehrt von der Samenschale abgelöst. Es ist vorteilhaft, wenn die mechanische Einwirkung in Form auf die Kleie einwirkender Scherkräfte erfolgt. Dies kann z.B. dadurch geschehen, dass die Flüssigkeit, in der die Kleie geführt wird, in eine Kolloidmühle eingeleitet wird, von der dann die Scherkräfte aufgebracht werden. Die mechanische Einwirkung auf die Kleie kann auch mittels eines Extruders erfolgen.

Bei einer besonders bevorzugten Ausführung werden die Zellwände der Aleuronzellen durch die biochemische Substanz zumindest teilweise aufgebrochen, so dass die Inhaltsstoffe der Aleuronzellen austreten können. Je nach Bedarf wird aus ernährungsphysiologischen Gründen z.B. ein mehr oder weniger vollständiger enzymatischer Abbau der Aleuronzellwände bevorzugt, bei denen es sich um Hemicellulose handelt, die als Lebensgrundlage für bestimmte Darmbakterien wichtig sind.

Überraschend hat sich gezeigt, dass eine Aleuronschicht und deren einzelne Zellen durch Schwächung der Adhäsion von der fest anhaftenden Samenhaut getrennt werden können. Dies erfolgt bevorzugt mittels geeigneter Enzyme, zum Beispiel einer Endoxylanase/Arabinoxylanase. Begünstigt wird die Schwächung der adhäsiven Bindung durch ein Abschrecken.

Erhalten werden Aggregate von Aleuronzellen mit intakten Zellwänden oder in Lösung befindliche Zellen, deren Inhaltsstoffe separiert und aufgeschlossen werden können.

Zu verwendende Enzyme sind auch für die menschliche Ernährung unbedenklich, so dass die Aleuronzellen oder deren Inhaltsstoffe (Proteine, Vitamine u. a.) insbesondere für bzw. in diätischen Nahrungsmitteln verwendbar sind.

Es hat sich gezeigt, dass die die Adhäsionskräfte zwischen den Aleuronzellen und der sehr zähen, braunen Samenschale durch den Einsatz von Enzymen und gelinder mechanischer Prallwirkung, aufgehoben werden können und somit ein Loslösen intakter Aleuronzellen von der Samenschale zur Folge hat.

Dies gelingt weitgehend durch Enzyme mit Xylanaseaktivität und zarter mechanischer Prallwirkung mittels Fliehkraftmühle.

Es hat sich weiterhin gezeigt, dass die Aleuronzellen durch Behandlung von Kleie mit Enzymen komplett aufgelöst werden können, und somit eine Separation des Aleuronzellinhaltes und deren Zellwandfragmente von den darüberliegenden, unzerstört gebliebenen Schalenbestandteilen, insbesondere der Samenschale, möglich ist. Dies geschieht vorwiegend mit einer Enzymmischung aus Xylanase, Betaglucanase, Cellulase und Arabinase.

### Resümee:

Unter den entsprechenden Bedingungen enthält man entweder intakte oder aufgeschlossene Aleuronzellen, bzw. deren Inhaltstoffe.

Die zur Anwendung kommenden Enzyme gelten für die menschliche Ernährung als unbedenklich.

Ein weiterer Vorteil bietet auch die Möglichkeit der analytischen Zugänglichkeit einzelner Schichten.

Zweckmässigerweise werden vorwiegend Aleuron aufweisende Bestandteile und vorwiegend kein Aleuron aufweisende Bestandteile der in der wässrigen Masse vorliegenden Kleie voneinander getrennt bzw. isoliert.

Diese Trennung bzw. Isolierung kann bei der "nassen" Variante des erfindungsgemässen Verfahrens erfolgen, indem die wässrige Masse aus enzymatisch behandelter Kleie gepresst wird, so dass in der wässrigen Phase gelöste und suspendierte Aleuronbestandteile in der wässrigen Phase als Aleuronsaft mitgeführt werden und die restlichen Kleiebestandteile im Presskuchen in der Presse verbleiben. Alternativ kann die wässrige Masse aus enzymatisch behandelter Kleie gefiltert werden, so dass in der wässrigen Phase gelöste und/oder suspendierte Aleuronbestandteile in der wässrigen Phase als Aleuronsaft mitgeführt werden und die restlichen Kleiebestandteile als Filterrückstand im Filter verbleiben.

Die wässrige Masse aus enzymatisch behandelter Kleie kann jedoch auch durch Dekantieren in die Aleuronbestandteile und die Nicht-Aleuronbestandteile getrennt werden. Oder sie kann aufgrund von Benetzbarkeitsunterschieden und/oder von Löslichkeitsunterschieden in zwei nicht-mischbaren Flüssigkeiten in die Aleuronbestandteile und die Nicht-Aleuronbestandteile getrennt werden. In gewissen Fällen ist es auch möglich und durchaus vorteilhaft, die Trennung bzw. Isolierung durch Kombination der genannten Trennschritte durchzuführen, wobei sowohl gleiche als auch verschiedene Trennschritte nacheinander an derselben wässrigen Masse erfolgen können.

Zur Trennung bzw. Isolierung der verschiedenen Aleuronbestandteile voneinander wird der Aleuronsaft, in dem die Aleuronbestandteile mitgeführt werden, vorzugsweise zentrifugiert. Der Aleuronsaft kann hierfür auch durch Mikrofiltration und/oder Ultrafiltration gefiltert werden. Er kann sogar einer Umkehr-Osmose ausgesetzt werden, um noch weitere bestimmte Aleuronbestandteile zu trennen bzw. zu isolieren. Auf diese Weise lassen sich verschiedene Fraktionen von Aleuronbestandteilen gewinnen, die in funktionellen Lebensmitteln gezielt eingesetzt werden können.

Vorzugsweise wird dem Aleuronsaft, in dem die Aleuronbestandteile mitgeführt werden, Wasser entzogen, um die Konzentration der Aleuronbestandteile zu erhöhen, damit ein eingedickter Aleuronsaft gewonnen wird. Alternativ kann auch ein aus Aleuronbestandteilen bestehendes Aleuronpulver durch Sprühtrocknung, Gefriertrocknung oder Vakuumtrocknung hergestellt werden, wobei vor der Herstellung des Aleuronpulvers vorzugsweise eine Vorkonzentration in einem Verdampfer erfolgt. Insbesondere werden in dem Aleuronsaft gelöste Proteine ausgefällt, indem man den Aleuronsaft erhitzt oder die Proteine aussalzt. Die so gewonnenen aleuronhaltigen Produkte lassen sich sehr gut handhaben.

Um ein seine Eigenschaften nicht veränderndes und haltbares Produkt zu erhalten, wird die wässrige Masse bzw. der Aleuronsaft, welche bzw. welcher die Aleuronbestandteile und die Enzyme aufweisende biochemisch aktive Substanz enthält, nach ausreichend langer Enzymaktivität vor der Eindickung bzw. Pulverherstellung pasteurisiert.

Bei der "trockenen" Variante der mechanisch-abrasiven Behandlung der Kleie erfolgt das Ablösen der Aleuronbestandteile von den Nicht-Aleuronbestandteilen in einem Walzwerk, einer Schleuderprallmühle oder in einer Strahlmühle. Bei Bedarf können diese Vorgehensweisen auch kombiniert werden. Zweckmässigerweise wird die Kleie angefeuchtet, bevor sie der mechanisch-abrasiven Behandlung ausgesetzt wird.

Bei einer besonders vorteilhaften Ausführung des erfindungsgemässen Verfahrens, nämlich der "nassen" Variante der mechanisch-abrasiven Behandlung, wird die Kleie in Wasser gebracht und erfolgt die Ablösung der Aleuronbestandteile von den Nicht-Aleuronbestandteilen in einer Kolloidmühle oder in einer Kugelmühle, wobei in der Kugelmühle vorzugsweise Kunststoffkügelchen mit einer ähnlichen Dichte wie die der Kleie verwendet werden.

Die voneinander im Trockenen oder im Nassen abgelösten Aleuronbestandteile und Nicht-Aleuronbestandteile werden klassiert und zu Fraktionen sortiert. Die Klassierung bzw. Sortierung des Gemisches aus Aleuronbestandteilen und Nicht-Aleuronbestandteilen kann auch durch Windsichtung, ggf. nach vorheriger Trocknung, erfolgen. Vorzugsweise verwendet man hierfür einen Kanalrad-Windsichter, einen Zickzack-Windsichter oder einen Querstrom-Windsichter. Bei Bedarf können auch hier Kombinationen dieser Windsichtungsarten verwendet werden.

Bei einer weiteren vorteilhaften Ausführung werden die feinen Teilchen einer durch Windsichtung gewonnenen feinen Fraktion ausgesondert, bevor sie einer weiteren Klassierung durch Sieben unterzogen werden. Dadurch wird ein Verstopfen der Siebe durch Ablagerungen feiner Teilchen an ihnen verhindert. Vorzugsweise verwendet man zum Sieben geerdete Metallsiebe. Dadurch wird die Gefahr einer Aufladung feiner Teilchen und der Agglomeratbildung aus solchen feinen Teilchen verringert. Derartige Agglomerate aus feinen Teilchen würden bei ggf. weiteren Schritten zur Trennung bzw. Isolierung zu verfälschten Fraktionen führen.

Bei Bedarf erfolgt im Anschluss an die Klassierung bzw. Sortierung durch Windsichtung eine Klassierung bzw. Sortierung in einem elektrischen Feld, wobei sowohl örtlich homogene als auch inhomogene, zeitlich konstante Felder als auch Wechselfelder Verwendung finden. Damit lassen sich verschiedene Teilchen aufgrund ihrer verschiedenen elektrischen Ladung und/oder ihrer verschiedenen elektrischen Polarisierung voneinander trennen.

Wenn z.B. bei der Bearbeitung von Weizenkleie die Kanalrad-Windsichtung angewendet wird, wobei die verschiedenen Teilchen der groben Fraktion der Kleie, die sowohl von der Furche des Weizenkorns stammende Nicht-Aleuron-Schalenteilchen als auch Aleuronteilchen enthält, während ihres Durchlaufs durch den bogenförmigen, insbesondere kreisförmigen Kanal des Kanalrad-Windsichters durch Reibung der Teilchen untereinander und/oder mit der Kanalwand aufgrund von Kontaktelektrizität auf verschiedene Weise elektrisch geladen und/oder polarisiert werden und nach ihrem Austritt aus dem Kanalrad-Windsichter eine Flugbahn durch einen von einem elektrischen Feld durchsetzten Raum durchlaufen, so kommt es zu einer Ansammlung der von der Furche stammenden Nicht-Aleuron-Schalenteilchen an einem ersten Ort und zu einer Ansammlung Aleuronteilchen an einem von dem ersten Ort verschiedenen zweiten Ort. Diese Trennung ist besonders vorteilhaft, da die von den dunklen Schalenteilchen der Furche befreiten weissen bis gelblichen Aleuronteilchen dadurch optisch sauberer erscheinen. Ausserdem sollte nicht unerwähnt bleiben, dass die Furche der Weizenkörner nur schlecht, wenn überhaupt, gereinigt werden kann, so dass sie viele ungewollte Substanzen, ggf. auch Umweltgifte enthält.

Bei einer weiteren Ausführung erfolgt die Trennung des aus der vermahlenen Kleie bestehenden Mahlgutes, indem man das Mahlgut gleichzeitig an einer ersten Stelle in eine geneigte vibrierende Rinne einleitet, deren Neigung, Oberflächenrauhigkeit und Vibration so ausgelegt sind, dass sich die verschiedenen Mahlgut-Bestandteile in der Rinne mit verschiedenen Wandergeschwindigkeiten entlang der Rinne fortbewegen, wodurch man an verschiedenen weiteren Stellen in der Rinne während aufeinanderfolgender Zeitintervalle jeweils verschiedene Mahlgut-Fraktionen mit mehr oder weniger Aleuronbestandteilen gewinnt.

Vorzugsweise erfolgt die mittels der Rinne erfolgende Trennung des aus der vermahlenen Kleie bestehenden Mahlgutes, indem man das Mahlgut ebenfalls gleichzeitig an einer ersten Stelle in eine geneigte vibrierende Rinne einleitet, deren Neigung, Oberflächenrauhigkeit und Vibration jedoch so ausgelegt sind, dass die Aleuronbestandteile zum oberen Ende der Rinne hin wandern, während die Nicht-Aleuronbestandteile zum unteren Ende der Rinne hin wandern.

Ein weitere Möglichkeit zur Trennung des Mahlgutes ist die Sedimentation in einem mit Fluid gefüllten Behälter, wobei man aufgrund unterschiedlicher Sinkzeiten der verschiedenen Mahlgut-Bestandteile im fluidgefüllten Behälter am Boden des Behälters verschiedene Mahlgut-Fraktionen in Form von mehr oder weniger Aleuronbestandteile aufweisenden Sedimentschichten gewinnt.

Die Trennung des Mahlgutes kann auch erfolgen, indem man die Mahlgutteilchen entlang einer Äquipotentialfläche eines inhomogenen elektrischen Feldes bewegt, wodurch aufgrund unterschiedlicher dielektrischer Eigenschaften der Mahlgutteilchen eine Auffächerung des Mahlgutstrahles bzw. Mahlgutstromes in mehr oder weniger Aleuronbestandteile aufweisende Fraktionen erfolgt. Der Strahl aus Mahlgutteilchen wird z.B. mittels eines entlang einer Äquipotentialfläche des elektrischen Feldes laminar strömenden Trägerfluids auf einer definierten Bahn bewegt und dabei durch das inhomogene elektrische Feld aufgefächert.

Zweckmässigerweise werden die Mahlgutteilchen durch Reibung aneinander und/oder an einem Teil eines Behälters elektrostatisch aufgeladen und quer zu einem elektrischen Feld bewegt, wodurch aufgrund unterschiedlicher elektrischer Eigenschaften der Mahlgutteilchen eine Auffächerung des Mahlgutstrahls in mehr oder weniger Aleuronbestandteile aufweisende Fraktionen erfolgt. Insbesondere wird der Strahl aus Mahlgutteilchen mittels eines quer zum elektrischen Feld laminar strömenden Trägerfluids auf einer definierten Bahn bewegt und durch das elektrische Feld aufgefächert.

Die Trennung kann auch durch Kombination dieser genannten Trennschritte erfolgen,
wobei vorzugsweise nur ein Wechsel vom "nassen" Verfahren zum "trockenen" Verfahren erfolgt.

Nach der Fraktionierung der Kleiebestandteile, z.B. mittels einer der genannten Vorgehensweisen, können die gewonnenen Mahlgut-Fraktionenen mit einer für die jeweilige Fraktion spezifischen biochemischen Substanz weiterbehandelt werden. Dadurch lassen sich die Produkteigenschaften gezielt beeinflussen. Es ist also durchaus sinnvoll, die verschiedenen Aleuronfraktionen zunächst voneinander zu isolieren, dann jede Fraktion jeweils spezifisch zu behandeln und danach die spezifisch behandelten Fraktionen wieder zu vermischen, wobei auch von den durch die Natur vorgegebenen Mischungsverhältnissen abgewichen werden kann, was bei der Herstellung funktioneller Lebensmittel (functional food) wichtig ist.

Die biochemische Substanz weist vorzugsweise mindestens eines der Enzyme Betaglucanase, Cellulase, Xylanase und Arabinase in einem wässrigen Medium auf, mit dem die Mahlgut-Fraktionen zu einer wässrigen Masse vermischt werden.

Besonders vorteilhaft ist es, wenn die biochemische Substanz mindestens eines der Enzyme Endoxylanase, Beta-Xylosidase, Arabinofuranosidase, Acetylesterase, Xylanacetylesterase und Feruloylesterase in diesem wässrigen Medium aufweist, mit dem die Mahlgut-Fraktionen vermischt werden.

Vorzugsweise liegt das Nahrungsergänzungsmittel oder das Futterergänzungsmittel auf Aleuronbasis in Form eines Presslings aus Aleuronbestandteilen und einem ernährungsphysiologisch unbedenklichen Bindemittel vor. Zur Herstellung verwendet man z.B. das weiter oben beschriebene Aleuronpulver.

Das Nahrungsergänzungsmittel bzw. Futterergänzungsmittel kann auch in Form eines Getränks vorliegen. Hier kann z.B. der erwähnte eingedickte Aleuronsaft in mehr oder weniger eingedickter Form verwendet werden.

Die Beimischung oder das Nahrungsergänzungsmittel bzw. Futterergänzungsmittel kann auch ein Pulver sein. Hierzu kann ebenfalls das oben beschriebene Aleuronpulver dienen.

Weiterhin kann das Nahrungsmittel ein stärkehaltiges Produkt oder ein Milchprodukt sein. Prinzipiell kann die aleuronhaltige Beimischung in Form von Pulver oder in Form von Saft jedoch jedem beliebigen verarbeiteten Lebensmittel zugeführt werden, um funktionelle Lebensmittel mit spezieller physiologischer Wirkung, speziellem Geschmack, spezieller Textur, etc. herzustellen.

So kann z.B. eine durch spezifische Mikrofiltration und/oder spezifische Zentrifugation isolierte Sorte von Aleuronbestandteilen aus dem Protoplasma von Aleuronzellen dem funktionellen Lebensmittel beigemischt werden. In dem aleuronhaltigen Produkt können auch ein Teil oder alle der oben genannten, abgetrennten bzw. isolierten Aleuronbestandteile enthalten sein.

Das erfindungsgemässe funktionelle Lebensmittel enthält mindestens einen gemäss der oben beschriebenen Verfahrensweisen gewonnenen Inhaltsstoff des Aleurons.

Das erfindungsgemässe funktionelle Lebensmittel kann wahlweise enzymatisch vollständig hydrolysierte Aleuronzellen, enzymatisch teilweise hydrolysierte Aleuronzellen oder noch vollständig intakte Aleuronzellen aufweisen. So können die Zellwände und Zellinhalte der quasi "vorverdauten" vollständig hydrolysierten Aleuronzellen dem menschlichen Stoffwechsel unmittelbar zugeführt werden, während die enzymatisch teilweise hydrolysierten und somit "halb vorverdauten" Aleuronzellen mit ihren "geschwächten" Zellwänden einerseits für den Menschen leichter verdaulich werden, andererseits aber auch noch als Nahrung für die Darmbakterien dienen. Auch der Anteil an vollständig intakten Aleuronzelien in einem derartigen funktionellen Lebensmittel kommt dem Menschen zugute, da die aus Hemicellulose bestehenden Zellwände der Aleuronzellen zumindest unter Mitwirkung der Darmbakterien durch den Menschen verdaut werden können.

Weitere Vorteile, Merkmale und Anwendungsmöglichkeiten der Erfindung ergeben sich aus der folgenden Beschreibung einiger nicht einschränkend aufzufassender Ausführungsbeispiele.

### Nasses Verfahren:

Trockener und gereinigter Weizen wird in einem geschlossenen Behälter, der mit, mit Enzymen versetztem Wasser gefüllt ist, gerührt.

Das Wasser wird durch den Eintrag der mechanischen Energie erwärmt, ggf. kann der Kessel noch mit einer gesonderten Heizeinrichtung versehen sein, um die Erwärmung zu beschleunigen.

Durch die Einwirkung der Enzyme werden die Fruchtschalen abgelöst und können separiert werden. Nach weiterem Rühren löst sich auch die Samenhaut von den Aleuronzellen und diese lösen sich vom Mehlkern. Die Mehlkerne können nun entfernt und die im Wasser befindlichen Aleuronzellen gesondert aufgeschlossen werden.

### Beispiel 1

Weizenkleie mit einer Grössenverteilung von 400 - 8000 µ wird mit Wasser versetzt und bei Temperaturen von 45-55° C unter Zugabe einer Enzymlösung /Xylanase, Betaglucanase, Cellulase und Arabinase) gerührt. Durch die Einwirkung einzelner/mehrerer Enzyme können zum einen die Aleuronzellen als Verbände von der Samenschale abgesondert werden und zum anderen komplett aufgelöst werden und somit von den übrigen Schalenbestandteilen abgesiebt werden. Die Aleuronzellen werden dabei aufgelöst und der Zellinhalt ergiesst sich als Protoplasma in die Lösung. Die Nasssiebrückstand enthält die nicht aufgelösten Schalenbestandteile (Samenschalen, Fruchtschalen). Der Nasssiebdurchfall enthält die Inhaltsstoffe der Aleuronzellen und deren Zellwandfragmente. Dieser Nasssiebdurchfall wird durch Sprüh- und/oder Gefriertrocknung zu einem grau-gelblichen Pulver aufkonzentriert.

### Beispiel 2

Weizenkleie mit einer Grössenverteilung von 400 - 800 µ wird mit Wasser versetzt und bei Temperaturen von 45-55° C unter Zugabe einer Enzymlösung /Xylanase) gerührt. Es kommt zu einer Schwächung der Adhäsionskräfte zwischen der Samenschale und der Aleuronzellschicht, dies hat eine Trennung der beiden aneinanderhaftenden Schichten zur Folge. Dieser Effekt kann durch zarte mechanische Beanspruchung (Fliehkraftmühle) ohne Zerstörung der Zellverbände optimiert werden.

### Beispiel 3

Weizenkleie wird mit Wasser versetzt und bei Temperaturen von 45-50° C unter Zugabe einer Enzymlösung (Xylanase, Betaglucanase, Cellulase und Arabinase) eine Stunde lang gerührt. Die verbleibende Suspension wird mit einem Dispergierer zwei Minuten lang zerteilt. Die so zurückbleibende Suspension wird gesiebt. Der Nasssiebdurchfall enthält die aufgeschlossenen Aleuronzellen und deren Inhalt, während der Siebrückstand aus Samenschale besteht, die völlig frei von Aleuronzellen ist.

### Trockenes Verfahren:

Anfallende Kleie wird nach dem Reinigen in der Kleieschleuder getrocknet und leicht erwärmt. Nach dem Vermahlen in einer Mühle, bei dem der eigentliche Trenneffekt zwischen Schale und Aleuronschicht wirken soll, wird die Mischung aus Kleiebestandteile in Fraktionen gesiebt. Anschliessend erfolgt eine Windsichtung zur Sortierung der Komponenten Schale (Pericarp; Testa) und Aleuron evtl. mit anhaftender Schale. Die Verfahrenschritte Trennen, Sieben und Sichten werden naturgemäss mehrmals durchlaufen, um die gewünschten Anreicherung an Aleuronzellen zu erreichen. Die erhaltene Komponente aus Aleuron enthält eine Konzentration von mindestens 60% Aleuronzellen, vorzugsweise über 80 %. Je nach Verwendung werden diese Komponenten weiter getrocknet und vermahlen, z.B. auf einem Walzenstuhl. Im Weiteren werden die einzelnen Verfahrensschritte näher beschrieben.

Beim Verfahrensschritt Trennen müssen die Kleiepartikel Kräfte erfahren, die zu einer Trennung von Aleuron und Schale führen. Verwendet man eine Schlagmühle, so werden die Teile infolge der angreifenden Kräfte (Schlagkraft, Massenkräfte) vornehmlich auf Biegung beansprucht. Dies führt bei Teilchengrösse von ca. > 800 µm zu einer Zerkleinerung der Teile und nicht zu einer Trennung. Erst wenn die Teile eine bestimmte Grösse unterschritten haben, kann durch die Massenkräfte bedingt eine Trennung von Aleuron und Schale erfolgen. Die Grösse der Partikel, bei der die Trennung erfolgt, ist von der Festigkeit der verschiedenen Schichten (Pericarp→ Cellulose; Testa→ Hemicellulose; Aleuron → Heimicellulose) und den Haftkräfte unter den Schichten abhängig. Festigkeit und Haftkraft werden von der Feuchtigkeit und Temperatur entscheidend beeinflusst. Um optimale Verhältnisse bei Trennen muss die Kleie zunächst thermisch behandelt. Versuche haben gezeigt, dass eine Produktfeuchtigkeit zwischen 8 - 12 %, vorzugsweise 10 %, optimal ist. Die Produkttemperatur beim Trennen sollte dann 25 C nicht unterschreiten.

Beim der Schlagmühle haben sich Geschwindigkeiten von ca. 70 m/s, aber < 120 m/s, als günstig erwiesen. Der verwendete Sieb sollte eine Lochung von 0,3 - 0,8 mm, vorzugsweise 0,5 mm haben. Gute Resultate zeigten sogenannte Raffelsiebe (Handelsname Conidur) mit einer Lochung 0,5 mm.

Beim Trennen hat sich neben der Schlagbeanspruchung die Prallbeanspruchung wie sie zum Beispiel in der Strahlmühle oder in der Schleuderprallmühle auftritt, als günstig erwiesen. Besonders die Vorgänge in der Schleuderprallmühle (MIPS) zeigen eine günstige Wirkung auf den Trenneffekt, weil durch die Leitschaufel im Schleuderrotor die plattenförmigen Kleiepartikel ausgerichtet werden und der Aufprall auf der Kante geschieht. Dadurch werden Massenkräfte wirksam ohne das es zu einer Biegebeanspruchung der Partikel und damit zur Zerkleinerung kommt. Dies führt dazu, dass Schale und Aleuron als grössere Teile sich lösen und somit beim Sortieren einfachere Apparate verwendet werden können.

Das Verfahren zur Gewinnung von Aleuron kann somit in 5 Verfahrensschritte unterteilt werden:
1. Trocknen / Erwärmen
2. Trennen
3. Sieben
4. Windsichten
5. Zerkleinern

Erfahrungsgemäss durchläuft nach der Trocknung ein Kleiepartikel mehrere Zyklen. Die Anzahl Zyklen ist stark von der gewünschten Qualität (Schalenanteil) abhängig. Partikel die nach dem Verfahrensschritt Trennen beim Sieben zur Fraktion > 500 µm gehören, werden nochmals dem Verfahrensschritt Trennen zugeführt, weil in der Regel sich die Testa bei dieser Fraktion noch nicht ganz vom Aleuron gelöst hat. Je nach gewünschter Qualität muss das Sieben und Windsichten mehrmals durchlaufen werden. Partikel > 300 µm werden erfahrungsgemäss am besten mit einem Zickzack Windsichter sortiert. Partikel <300 µm zeigen eine Neigung zum Agglomerieren, so dass sich hier der Kanalradwindsichter anbietet. Dieser Sichtertyp hat den Vorteil, dass er die Agglomerate dispergiert und zudem eine grössere Trennschärfe besitzt.

Wie bekannt spielt beim Sortieren die Fraktionsbreite und die Trennschärfe eine wichtige Rolle. Versuche haben gezeigt, dass mit folgenden Maschenbreiten beim Sieben sich günstige Siebfraktionen für das sich anschliessende Windsichten gewonnen werden können:
1. 400 µm
2. 300 µm
3. 200 µm
4. 150 µm
5. 100 µm

Messungen der wichtigsten Mineralstoffe (Ca, Fe, K, Mg, P, Zn) haben gezeigt, dass sich einen Anreicherung gegenüber der Kleie um einen Faktor 2 erreichen lässt und somit der Schalenanteil <10% sein muss. Einzig bei der Fraktion, welche als Durchfall anfällt ( Sieb 100 µm) ist das nicht der Fall. Naturgemäss ist bei dieser Partikelgrösse (<100 µm) eine Sortierung stark erschwert und entsprechend aufwendig.

Falls es die Anwendung es erfordert, kann als letzter Schritt das Aufbrechen der Aleuronzellen mit einem Walzenstuhl erfolgen.

### Chemische Analyse von mit dem Verfahren der Anmelderin gewonnenem Aleuron

| **Inhaltsstoff Energie (berechnet)** | **Masseinheit kcal/kJ** | **Gehalt pro 100 g 200l/840** |
|---|---|---|
| **Eiweiss** | g | 16 |
| **Kohlenhydrate** | g | 42 |
| Stärke | g | 1 |
| Cellulose | g | 0 |
| Zucker, davon | g | 12,9 |
| freie Zucker | g | 8,6 |
| Raffinose | g | 2,6 |
| **Fett**, davon | g | 8 |
| gesättigte Fettsäuren | g | 1,4 |
| einfach ungesättigte FS | g | 1,4 |
| mehrfach ungesättigte FS | g | 5,2 |
| **Nahrungsfasern**, davon | g | 45 |
| Löslich | g | 15 |
| Unlöslich | g | 30 |
| **Vitamine** | | |
| E (Tocopherol) | mg | 6 |
| B1 (Thiamin, Aneurin) | mg | 1,3 |
| B2 (Riboflavin, Laktoflavin | mg | 1 |
| B6 (Pyridoxin, Adermin) | mg | 4 |
| Folsäure | ig | 300 |
| Niacin, Nicotinamid | mg | 35 |
| Pantothensäure | mg | 4,5 |
| **Mineralstoffe (Asche)** | | |
| Kalzium (Ca) | mg | 2225 |
| Magnesium (Mg) | mg | 915 |
| Phosphor(P) | mg | 2520 |
| Eisen (Fe) | mg | 22 |
| Zink (Zn) | mg | 28 |
| **Phytochemikalien** | | |
| Phytinsäure | g | 4,12 |
| Ferulasäure | mg | 5 |
| Kaffeesäure | mg | 1 |
| Chlorogensäure | mg | 1 |
| Lignane | g | 13 |
| Arabinoxylan | g | 29 |

Die Tabelle zeigt das Ergebnis einer von der Anmelderin durchgeführten chemischen Analyse von Aleuron, das mit dem erfindungsgemässen Verfahren gewonnen wurde.

Besonders hervorzuheben ist die spürbare Verbesserung vieler Körperfunktionen aufgrund der Verabreichung von Aleuron in der Nahrung. So wirken sich z.B. die mehrfach ungesättigten Fettsäuren positiv auf Herz/Kreislauf und auf den Cholesterinspiegel aus. Vitamin E (Tocopherol) wirkt sich positiv auf Herz/Kreislauf und den Cholesterinspiegel sowie auf den Dickdarm aus. Vitamin B6 (Pyridoxin, Adermin) wirkt sich besonders positiv auf die allgemeine Gesundheit und das Wohlbefinden aus. Folsäure ebenso wie Magnesium wirkt sich äusserst positiv auf die geistige und körperliche Leistungsfähigkeit aus. Eisen trägt ebenfalls zum allgemeinen Gesundheitszustand und zum Wohlbefinden bei. Sowohl die löslichen als auch die unlöslichen Nahrungsfasern wirken sich sehr positiv auf die Verdauung, Herz/Kreislauf sowie den Dickdarm aus.

## Patentansprüche

1. Verfahren zur Aufbereitung von Kleie, insbesondere Weizenkleie, zur Gewinnung von Aleuronzellen, insbesondere des Weizenkorns, **dadurch gekennzeichnet, dass** in der Kleie die vorwiegend Aleuron enthaltenden Aleuronbestandteile von den vorwiegend kein Aleuron enthaltenden Nicht-Aleuronbestandteilen abgelöst werden; und die Aleuron enthaltenden Bestandteile anschliessend ausgesondert werden.

2. Verfahren nach Anspruch 1, **dadurch gekennzeichnet, dass** die Ablösung der Aleuronzellen von der Kleie biochemisch-enzymatisch erfolgt.

3. Verfahren nach Anspruch 2, **dadurch gekennzeichnet, dass** Kleie in einem mit Wasser gefüllten Behälter bei einer für Enzyme optimalen Temperatur und optimalem pH-Wert unter Zusatz einer Enzyme aufweisenden biochemisch aktiven Substanz geführt wird, so dass die Adhäsionskräfte zwischen der Aleuronzellenschicht und der braunen Samenschale durch die Enzyme derart geschwächt werden, dass durch eine geringe mechanische Einwirkung die Aleuronzellverbände unversehrt von der Samenschale abgelöst werden können.

4. Verfahren nach einem der Ansprüche 1 bis 3, **dadurch gekennzeichnet, dass** die Kleie vorab zerkleinert wird (400-800µm).

5. Verfahren nach einem der Ansprüche 1 bis 4, **dadurch gekennzeichnet, dass** die Kleie vorab von Endosperm befreit wird.

6. Verfahren nach einem der Ansprüche 2 bis 5, **dadurch gekennzeichnet, dass** durch geringe mechanische Einwirkung die Aleuronzellverbände unversehrt von der Samenschale abgelöst werden.

7. Verfahren nach Anspruch 6, **dadurch gekennzeichnet, dass** die mechanische Einwirkung in Form auf die Kleie einwirkender Scherkräfte erfolgt.

8. Verfahren nach Anspruch 7, **dadurch gekennzeichnet, dass** die Flüssigkeit, in der die Kleie geführt wird, in eine Kolloidmühle eingeleitet wird, von der die Scherkräfte aufgebracht werden.

9. Verfahren nach Anspruch 7 oder 8, **dadurch gekennzeichnet, dass** die mechanische Einwirkung auf die Kleie mittels eines Extruders erfolgt.

10. Verfahren nach einem der Ansprüche 3 bis 9, **dadurch gekennzeichnet, dass** die Zellwände der Aleuronzellen durch die biochemische Substanz zumindest teilweise aufgebrochen werden, so dass die Inhaltsstoffe der Aleuronzellen austreten können.

11. Verfahren nach Anspruch 10, **dadurch gekennzeichnet, dass** vorwiegend Aleuron aufweisende Bestandteile und vorwiegend kein Aleuron aufweisende Bestandteile der in der wässrigen Masse vorliegenden Kleie voneinander getrennt bzw. isoliert werden.

12. Verfahren nach Anspruch 11, **dadurch gekennzeichnet, dass** die wässrige Masse aus enzymatisch behandelter Kleie gepresst wird, so dass in der wässrigen Phase gelöste und suspendierte Aleuronbestandteile in der wässrigen Phase als Aleuronsaft mitgeführt werden und die restlichen Kleiebestandteile im Presskuchen in der Presse verbleiben.

13. Verfahren nach Anspruch 11, **dadurch gekennzeichnet, dass** die wässrige Masse aus enzymatisch behandelter Kleie gefiltert wird, so dass in der wässrigen Phase gelöste und/oder suspendierte Aleuronbestandteile in der wässrigen Phase als Aleuronsaft mitgeführt werden und die restlichen Kleiebestandteile als Filterrückstand im Filter verbleiben.

14. Verfahren nach Anspruch 11, **dadurch gekennzeichnet, dass** die wässrige Masse aus enzymatisch behandelter Kleie durch Dekantieren in die Aleuronbestandteile und die Nicht-Aleuronbestandteile getrennt wird.

15. Verfahren nach Anspruch 11, **dadurch gekennzeichnet, dass** die wässrige Masse aus enzymatisch behandelter Kleie aufgrund von Benetzbarkeitsunterschieden in zwei nicht-mischbaren Flüssigkeiten in die Aleuronbestandteile und die Nicht-Aleuronbestandteile getrennt wird.

16. Verfahren nach Anspruch 11, **dadurch gekennzeichnet, dass** die wässrige Masse aus enzymatisch behandelter Kleie aufgrund von Löslichkeitsunterschieden in zwei nicht-mischbaren Flüssigkeiten in die Aleuronbestandteile und die Nicht-Aleuronbestandteile getrennt wird.

17. Verfahren nach Anspruch 11, **dadurch gekennzeichnet, dass** die Trennung durch Kombination von Trennschritten der Ansprüche 12 bis 16 erfolgt, wobei sowohl gleiche als auch verschiedene Trennschritte nacheinander an derselben wässrigen Masse durchgeführt werden können.

18. Verfahren nach einem der Ansprüche 12 bis 17, **dadurch gekennzeichnet, dass** der Aleuronsaft, in dem die Aleuronbestandteile mitgeführt werden, zentrifugiert wird, um verschiedene Aleuronbestandteile voneinander zu trennen bzw. zu isolieren.

19. Verfahren nach einem der Ansprüche 12 bis 18, **dadurch gekennzeichnet, dass** der Aleuronsaft, in dem die Aleuronbestandteile mitgeführt werden, durch Mikrofiltration gefiltert wird, um bestimmte Aleuronbestandteile zu trennen bzw. zu isolieren.

20. Verfahren nach einem der Ansprüche 12 bis 19, **dadurch gekennzeichnet, dass** der Aleuronsaft, in dem die Aleuronbestandteile mitgeführt werden, durch Ultrafiltration gefiltert wird, um weitere bestimmte Aleuronbestandteile zu trennen bzw. zu isolieren.

21. Verfahren nach einem der Ansprüche 12 bis 20, **dadurch gekennzeichnet, dass** der Aleuronsaft, in dem die Aleuronbestandteile mitgeführt werden, einer Umkehr-Osmose ausgesetzt wird, um noch weitere bestimmte Aleuronbestandteile zu trennen bzw. zu isolieren.

22. Verfahren nach einem der Ansprüche 11 bis 21, **dadurch gekennzeichnet, dass** dem Aleuronsaft, in dem die Aleuronbestandteile mitgeführt werden, Wasser entzogen wird, um die Konzentration der Aleuronbestandteile zu erhöhen, damit ein eingedickter Aleuronsaft gewonnen wird.

23. Verfahren nach Anspruch 22, **dadurch gekennzeichnet, dass** ein aus Aleuronbestandteilen bestehendes Aleuronpulver durch Sprühtrocknung, Gefriertrocknung oder Vakuumtrocknung hergestellt wird.

24. Verfahren nach Anspruch 22 oder 23, **dadurch gekennzeichnet, dass** vor der Herstellung des Aleuronpulvers eine Vorkonzentration in einem Verdampfer erfolgt.

25. Verfahren nach einem der Ansprüche 13 bis 24, **dadurch gekennzeichnet, dass** in dem Aleuronsaft gelöste Proteine ausgefällt werden.

26. Verfahren nach Anspruch 25, **dadurch gekennzeichnet, dass** die Proteine ausgefällt werden, indem man den Aleuronsaft erhitzt.

27. Verfahren nach Anspruch 25, **dadurch gekennzeichnet, dass** die Proteine durch Aussalzen ausgefällt werden.

28. Verfahren nach Anspruch 25, **dadurch gekennzeichnet, dass** die Proteine durch eine Kombination der Massnahmen von Anspruch 26 und/oder 27 und weiteren Massnahmen zum Ausfällen von Proteinen ausgefällt werden.

29. Verfahren nach einem der vorhergehenden Ansprüche, **dadurch gekennzeichnet, dass** die wässrige Masse bzw. der Aleuronsaft, welche bzw. welcher die Aleuronbestandteile und die Enzyme aufweisende biochemisch aktive Substanz enthält, nach ausreichend langer Enzymaktivität pasteurisiert wird.

30. Verfahren nach Anspruch 1, **dadurch gekennzeichnet, dass** die Ablösung der Aleuronzellen von der Kleie mechanisch-abrasiv durchgeführt wird.

31. Verfahren nach Anspruch 30, **dadurch gekennzeichnet, dass** das Ablösen der Aleuronbestandteile von den Nicht-Aleuronbestandteilen in einem Walzwerk erfolgt.

32. Verfahren nach Anspruch 1, **dadurch gekennzeichnet, dass** die Ablösung der Aleuronzellen von der Kleie erfolgt, indem man vorwiegend Massenkräfte unter Vermeidung von Biegebeanspruchung auf die plattenförmigen Kleieteilchen einwirken lässt.

33. Verfahren nach Anspruch 32, **dadurch gekennzeichnet, dass** das Ablösen der Aleuronbestandteile von den Nicht-Aleuronbestandteilen in einer Schleuderprallmühle erfolgt.

34. Verfahren nach Anspruch 32, **dadurch gekennzeichnet, dass** das Ablösen der Aleuronbestandteile von den Nicht-Aleuronbestandteilen in einer Strahlmühle erfolgt.

35. Verfahren nach Anspruch 1, **dadurch gekennzeichnet, dass** das Ablösen der Aleuronbestandteile von den Nicht-Aleuronbestandteilen durch Kombination von Ablösungsschritten der Ansprüche 31 bis 34 erfolgt.

36. Verfahren nach einem der Ansprüche 30 bis 35, **dadurch gekennzeichnet, dass** die Kleie angefeuchtet wird, bevor sie der mechanisch-abrasiven Behandlung ausgesetzt wird.

37. Verfahren nach Anspruch 30, **dadurch gekennzeichnet, dass** die Kleie in Wasser gebracht wird und die Ablösung der Aleuronbestandteile von den Nicht-Aleuronbestandteilen in einer Kolloidmühle erfolgt.

38. Verfahren nach Anspruch 30, **dadurch gekennzeichnet, dass** die Kleie in Wasser gebracht wird und die Ablösung der Aleuronbestandteile von den Nicht-Aleuronbestandteilen in einer Kugelmühle erfolgt.

39. Verfahren nach Anspruch 38, **dadurch gekennzeichnet, dass** in der Kugelmühle Kunststoffkügelchen verwendet werden.

40. Verfahren nach Anspruch 30 bis 39, **dadurch gekennzeichnet, dass** die voneinander abgelösten Aleuronbestandteile und Nicht-Aleuronbestandteile klassiert und zu Fraktionen sortiert werden.

41. Verfahren nach Anspruch 40, **dadurch gekennzeichnet, dass** die Klassierung bzw. Sortierung durch Windsichtung erfolgt.

42. Verfahren nach Anspruch 40, **dadurch gekennzeichnet, dass** die Klassierung bzw. Sortierung durch Kanalrad-Windsichtung erfolgt.

43. Verfahren nach Anspruch 40, **dadurch gekennzeichnet, dass** die Klassierung bzw. Sortierung durch Zickzack-Windsichtung erfolgt.

44. Verfahren nach Anspruch 40, **dadurch gekennzeichnet, dass** die Klassierung bzw. Sortierung durch Querstrom-Windsichtung erfolgt.

45. Verfahren nach Anspruch 40, **dadurch gekennzeichnet, dass** die Klassierung bzw. Sortierung durch Kombination der Windsichtungsarten der Ansprüche 41 bis 43 erfolgt.

46. Verfahren nach einem der Ansprüche 40 oder 41, **dadurch gekennzeichnet, dass** die feinen Teilchen der durch Windsichtung gewonnenen Fraktion ausgesondert werden, bevor sie einer weiteren Klassierung durch Sieben unterzogen werden.

47. Verfahren nach Anspruch 46, **dadurch gekennzeichnet, dass** zum Sieben geerdete Metallsiebe verwendet werden.

48. Verfahren nach einem der Ansprüche 41 bis 47, **dadurch gekennzeichnet, dass** im Anschluss an die Klassierung bzw. Sortierung durch Windsichtung eine Klassierung bzw. Sortierung in einem elektrischen Feld erfolgt.

49. Verfahren nach Anspruch 42, **dadurch gekennzeichnet, dass** es bei Weizenkleie angewendet wird und wobei die verschiedenen Teilchen der groben Fraktion der Kleie, die sowohl von der Furche des Weizenkorns stammende Nicht-Aleuron-Schalenteilchen als auch Aleuronteilchen enthält, während ihres Durchlaufs durch den bogenförmigen, insbesondere kreisförmigen Kanal des Kanalrad-Windsichters durch Reibung der Teilchen untereinander und/oder mit der Kanalwand aufgrund von Kontaktelektrizität auf verschiedene Weise elektrisch geladen und/oder polarisiert werden und nach ihrem Austritt aus dem Kanalrad-Windsichter eine Flugbahn durch einen von einem elektrischen Feld durchsetzten Raum durchlaufen, wodurch sich in die von der Furche stammenden Nicht-Aleuron-Schalenteilchen an einem ersten Ort ansammeln und die Aleuronteilchen an einem von dem ersten Ort verschiedenen zweiten Ort ansammeln.

50. Verfahren nach einem der vorhergehenden Ansprüche, **dadurch gekennzeichnet, dass** die Trennung des aus der vermahlenen Kleie bestehenden Mahlgutes erfolgt, indem man das Mahlgut gleichzeitig an einer ersten Stelle in eine geneigte vibrierende Rinne einleitet, deren Neigung, Oberflächenrauhigkeit und Vibration so ausgelegt sind, dass sich die verschiedenen Mahlgut-Bestandteile in der Rinne mit verschiedenen Wandergeschwindigkeiten entlang der Rinne fortbewegen, wodurch man an verschiedenen weiteren Stellen in der Rinne während aufeinanderfolgender Zeitintervalle jeweils verschiedene Mahlgut-Fraktionen mit mehr oder weniger Aleuronbestandteilen gewinnt.

51. Verfahren nach einem der Ansprüche 1 bis 50, **dadurch gekennzeichnet, dass** die Trennung des aus der vermahlenen Kleie bestehenden Mahlgutes erfolgt, indem man das Mahlgut gleichzeitig an einer ersten Stelle in eine geneigte vibrierende Rinne einleitet, deren Neigung, Oberflächenrauhigkeit und Vibration so ausgelegt sind, dass die Aleuronbestandteile zum oberen Ende der Rinne hin wandern, während die Nicht-Aleuronbestandteile zum unteren Ende der Rinne hin wandern.

52. Verfahren nach einem der vorhergehenden Ansprüche, **dadurch gekennzeichnet, dass** die Trennung des Mahlgutes durch Sedimentation in einem mit Fluid gefüllten Behälter erfolgt und man aufgrund unterschiedlicher Sinkzeiten der verschiedenen Mahlgut-Bestandteile im fluidgefüllten Behälter am Boden des Behälters verschiedene Mahlgut-Fraktionen in Form von mehr oder weniger Aleuronbestandteile aufweisenden Sedimentschichten gewinnt.

53. Verfahren nach einem der vorhergehenden Ansprüche, **dadurch gekennzeichnet, dass** die Trennung des Mahlgutes erfolgt, indem man die Mahlgutteilchen entlang einer Äquipotentialfläche eines inhomogenen elektrischen Feldes bewegt, wodurch aufgrund unterschiedlicher dielektrischer Eigenschaften der Mahlgutteilchen eine Auffächerung des Mahlgutstrahles bzw. Mahlgutstromes in mehr oder weniger Aleuronbestandteile aufweisende Fraktionen erfolgt.

54. Verfahren nach Anspruch 53, **dadurch gekennzeichnet, dass** der Strahl aus Mahlgutteilchen mittels eines entlang einer Äquipotentialfläche des elektrischen Feldes laminar strömenden Trägerfluids auf einer definierten Bahn bewegt und durch das inhomogene elektrische Feld aufgefächert wird.

55. Verfahren nach einem der vorhergehenden Ansprüche, **dadurch gekennzeichnet, dass** die Mahlgutteilchen durch Reibung aneinander und/oder an einem Teil eines Behälters elektrostatisch aufgeladen und quer zu einem elektrischen Feld bewegt werden, wodurch aufgrund unterschiedlicher elektrischer Eigenschaften der Mahlgutteilchen eine Auffächerung des Mahlgutstrahls in mehr oder weniger Aleuronbestandteile aufweisende Fraktionen erfolgt.

56. Verfahren nach Anspruch 55, **dadurch gekennzeichnet, dass** der Strahl aus Mahlgutteilchen mittels eines quer zum elektrischen Feld laminar strömenden Trägerfluids auf einer definierten Bahn bewegt und durch das elektrische Feld aufgefächert wird.

57. Verfahren nach einem der vorhergehenden Ansprüche, **dadurch gekennzeichnet, dass** die Trennung durch Kombination von Trennschritten der Ansprüche 50 bis 56 erfolgt.

58. Verfahren nach einem der vorhergehenden Ansprüche, **dadurch gekennzeichnet, dass** die gewonnenen Mahlgut-Fraktionenen mit einer für die jeweilige Fraktion spezifischen biochemischen Substanz weiterbehandelt werden.

59. Verfahren nach Anspruch 58, **dadurch gekennzeichnet, dass** die biochemische Substanz mindestens eines der Enzyme Betaglucanase, Cellulase, Xylanase und Arabinase in einem wässrigen Medium aufweist, mit dem die Mahlgut-Fraktionen zu einer wässrigen Masse vermischt werden.

60. Verfahren nach Anspruch 58, **dadurch gekennzeichnet, dass** die biochemische Substanz mindestens eines der Enzyme Endoxylanase, Beta-Xylosidase, Arabinofuranosidase, Acetylesterase, Xylanacetylesterase und Feruloylesterase in einem wässrigen Medium aufweist, mit dem die Mahlgut-Fraktionen zu einer wässrigen Masse vermischt werden.

61. Verwendung der durch das Verfahren nach einem der Ansprüche 1 bis 60 abgetrennten bzw. isolierten Aleuronbestandteile als Beimischung in Nahrungsmitteln, in Futtermitteln oder als Nahrungsergänzungsmittel oder als Futterergänzungsmittel.

62. Verwendung nach Anspruch 61, **dadurch gekennzeichnet, dass** das Nahrungsergänzungsmittel oder das Futterergänzungsmittel ein Pressling aus Aleuronbestandteilen und einem ernährungsphysiologisch unbedenklichen Bindemittel ist.

63. Verwendung nach Anspruch 61, **dadurch gekennzeichnet, dass** die Beimischung oder das Nahrungsergänzungsmittel bzw. Futterergänzungsmittel ein Getränk ist.

64. Verwendung nach Anspruch 61, **dadurch gekennzeichnet, dass** die Beimischung oder das Nahrungsergänzungsmittel bzw. Futterergänzungsmittel ein Pulver ist.

65. Verwendung nach Anspruch 61, **dadurch gekennzeichnet, dass** das Nahrungsmittel ein stärkehaltiges Produkt ist.

66. Verwendung nach Anspruch 61, **dadurch gekennzeichnet, dass** das Nahrungsmittel ein Milchprodukt ist.

67. Verwendung einer durch spezifische Mikrofiltration und/oder spezifische Zentrifugation isolierten Sorte von Aleuronbestandteilen aus dem Protoplasma von Aleuronzellen.

68. Aleuronhaltiges Produkt, in dem die nach einem der Ansprüche 1 bis 60 abgetrennten bzw. isolierten Aleuronbestandteile enthalten sind.

69. Produkt nach Anspruch 68, **dadurch gekennzeichnet, dass** es als pulverförmiges Aleuronkonzentrat vorliegt.

70. Produkt nach Anspruch 68, **dadurch gekennzeichnet, dass** es als Aleuronsaft-Konzentrat vorliegt.

71. Funktionelles Lebensmittel, in welchem mindestens ein gemäss einem der Ansprüche 1 bis 60 gewonnener Inhaltsstoff des Aleurons enthalten ist.

72. Funktionelles Lebensmittel nach Anspruch 71, **dadurch gekennzeichnet, dass** es enzymatisch vollständig hydrolysierte Aleuronzellen aufweist.

73. Funktionelles Lebensmittel nach Anspruch 71 oder 72, **dadurch gekennzeichnet, , dass** es enzymatisch teilweise hydrolysierte Aleuronzellen aufweist.

74. Funktionelles Lebensmittel nach Anspruch 71 bis 73, **dadurch gekennzeichnet, dass** es vollständig intakte Aleuronzellen aufweist.

## Claims

1. A method for preparing bran, in particular wheat bran, for obtaining aleuron cells, in particular of the wheat grain, **characterized in that** the aleuron constituents containing primarily aleuron in the bran are detached from the non-aleuron constituents containing primarily no aleuron; after which the aleuron-containing constituents are separated out.

2. The method according to claim 1, **characterized in that** the aleuron cells are biochemically and enzymatically detached from the bran.

3. The method according to claim 2, **characterized in that** the bran is processed in a container filled with water at a temperature optimal for enzymes and an optimal pH value with the addition of a biochemically active, enzyme-containing substance, so that the adhesive forces between the aleuron cell layer and the brown seed husk are weakened by the enzymes in such a way that a slight mechanical exposure can detach the aleuron cell clusters from the seed husk intact.

4. The method according to one of claims 1 to 3, **characterized in that** - the bran is first comminuted (400-800 µm).

5. The method according to one of claims 1 to 4, **characterized in that** the endosperm is first removed from the bran.

6. The method according to one of claims 2 to 5, **characterized in that** a slight mechanical exposure detaches the aleuron cell clusters from the seed husk intact.

7. The method according to claim 6, **characterized in that** the mechanical exposure involves shearing forces acting on the bran.

8. The method according to claim 7, **characterized in that** the liquid that carries the bran is introduced into a colloidal mill, which introduces the shearing forces.

9. The method according to claim 7 or 8, **characterized in that** an extruder subjects the bran to mechanical exposure.

10. The method according to one of claims 3 to 9, **characterized in that** the cell walls of the aleuron cells are broken open at least partially by the biochemical substance, so that the contents of the aleuron cells can exit.

11. The method according to claim 10, **characterized in that** primarily aleuron-containing constituents, and primarily non-aleuron-containing constituents of the bran present in the aqueous mass are separated or isolated from each other.

12. The method according to claim 11, **characterized in that** the aqueous mass is expressed from enzymatically treated bran, so that aleuron constituents dissolved and suspended in the aqueous phase are included in the aqueous phase as an aleuron juice, while the remaining bran constituents remain in the biscuit in the press.

13. The method according to claim 11, **characterized in that** the aqueous mass is filtered out of enzymatically treated bran, so that aleuron constituents dissolved and suspended in the aqueous phase are included in the aqueous phase as an aleuron juice, while the remaining bran constituents remain in the filter as filter residue.

14. The method according to claim 11, **characterized in that** the aqueous mass consisting of enzymatically treated bran is separated into the aleuron constituents and non-aleuron constituents via decanting.

15. The method according to claim 11, **characterized in that** the aqueous mass consisting of enzymatically treated bran is separated by wetability differences in two immiscible liquids into the aleuron constituents and non-aleuron constituents.

16. The method according to claim 11, **characterized in that** the aqueous mass consisting of enzymatically treated bran is separated by solubility differences in two immiscible liquids into the aleuron constituents and non-aleuron constituents.

17. The method according to claim 11, **characterized in that** separation takes place through a combination of separation steps in claims 12 to 16, wherein both the same and different separation steps can be performed sequentially on the same aqueous mass.

18. The method according to one of claims 12 to 17, **characterized in that** the aleuron juice that carries the aleuron constituents is centrifuged to separate or isolate various aleuron constituents from each other.

19. The method according to one of claims 12 to 18, **characterized in that** the aleuron juice that carries the aleuron constituents is filtered via microfiltration to separate or isolate specific aleuron constituents.

20. The method according to one of claims 12 to 19, **characterized in that** the aleuron juice that carries the aleuron constituents is filtered via ultrafiltration to separate or isolate more specific aleuron constituents.

21. The method according to one of claims 12 to 20, **characterized in that** the aleuron juice that carries the aleuron constituents is subjected to reverse osmosis to separate or isolate even more specific aleuron constituents.

22. The method according to one of claims 11 to 21, **characterized in that** water is removed from the aleuron juice that carries the aleuron constituents to increase the concentration of aleuron constituents, thereby yielding a concentrated aleuron juice.

23. The method according to claim 22, **characterized in that** an aleuron powder consisting of aleuron constituents is manufactured via spray drying, freeze drying or vacuum drying.

24. The method according to claim 22 or 23, **characterized in that** preliminary concentration in an evaporator takes place before manufacturing the aleuron powder.

25. The method according to one of claims 13 to 24, **characterized in that** proteins detached in the aleuron juice are precipitated.

26. The method according to claim 25, **characterized in that** the proteins are precipitated by heating the aleuron juice.

27. The method according to claim 25, **characterized in that** the proteins are precipitated via salting out.

28. The method according to claim 25, **characterized in that** the proteins are precipitated through a combination of measures from claim 26 and/or 27 and additional measures for precipitating proteins.

29. The method according to one of the preceding claims, **characterized in that** the aqueous mass or aleuron juice containing the aleuron constituents and the biochemically active, enzyme-exhibiting substance is pasteurized after a sufficiently long enzyme activity.

30. The method according to claim 1, **characterized in that** the aleuron cells are detached from the bran through mechanical abrasion.

31. The method according to claim 30, **characterized in that** the aleuron constituents are detached from the non-aleuron constituents in a roll mill.

32. The method according to claim 1, **characterized in that** the aleuron cells are detached from the bran by exposing the plate-shaped bran particles primarily to mass forces, avoiding any bending stresses.

33. The method according to claim 32, **characterized in that** the aleuron constituents are separated from the non-aleuron constituents in a centrifugal impact mill.

34. The method according to claim 32, **characterized in that** the aleuron constituents are separated from the non-aleuron constituents in a jet mill.

35. The method according to claim 1, **characterized in that** the aleuron constituents are separated from the non-aleuron constituents by combining the detachment steps in claims 31 to 34.

36. The method according to one of claims 30 to 35, **characterized in that** the bran is wetted before subjected to mechanical abrasion.

37. The method according to claim 30, **characterized in that** the bran is introduced into water, and the aleuron constituents are detached from the non-aleuron constituents in a colloidal mill.

38. The method according to claim 30, **characterized in that** the bran is introduced into water, and the aleuron constituents are detached from the non-aleuron constituents in a ball mill.

39. The method according to claim 38, **characterized in that** plastic balls are used in the ball mill.

40. The method according to claims 30 to 39, **characterized in that** the aleuron constituents and non-aleuron constituents detached from each other are classified and sorted into fractions.

41. The method according to claim 40, **characterized in that** classification or sorting takes place via wind sifting.

42. The method according to claim 40, **characterized in that** classification or sorting takes place via channel-wheel air separation.

43. The method according to claim 40, **characterized in that** classification or sorting takes place via zigzag air separation.

44. The method according to claim 40, **characterized in that** classification or sorting takes place via transverse current air separation.

45. The method according to claim 40, **characterized in that** classification or sorting takes place via a combination of the air separation types mentioned in claims 41 to 43.

46. The method according to one of claims 40 or 41, **characterized in that** the fine particles of the fraction obtained via air separation are separated out before subjected to further classification through screening.

47. The method according to claim 46, **characterized in that** grounded metal screens are used for screening.

48. The method according to one of claims 41 to 47, **characterized in that** classification or sorting via air separation is followed by classification or sorting in an electrical field.

49. The method according to claim 42, **characterized in that** it is used for wheat bran, wherein the various particles of the coarse bran fraction, which contains both the non-aleuron husk particles stemming from the furrow of the wheat grain as well as aleuron particles, become electrically charged and/or polarized in varying ways as the result of contact electricity while they pass through the arc-shaped, in particular circular channel of the channel wheel air separator as the particles rub against each other and/or the channel wall, and after exiting the channel wheel air separator follow a trajectory through a space exposed to an electrical field, as a result of which the non-aleuron husk particles stemming from the furrow accumulate at a first location, and the aleuron particles accumulate at a second location different than the first location.

50. The method according to one of the preceding claims, **characterized in that** the milled material consisting of the milled bran is separated by simultaneously introducing the milled material at a first location into an inclined, vibrating groove, the inclination, surface roughness and vibration of which are designed in such a way that the various milled material constituents in the groove move along the groove at varying traveling rates, thereby yielding respectively different milled material fractions with a higher or lower number of aleuron constituents at various additional locations in the groove during consecutive time intervals.

51. The method according to one of claims 1 to 50, **characterized in that** the milled material consisting of the milled bran is separated by simultaneously introducing the milled material at a fist location into an inclined, vibrating groove, the inclination, surface roughness and vibration of which are designed in such a way that the aleuron constituents wander toward the upper end of the groove, while the non-aleuron constituents wander toward the lower end of the groove.

52. The method according to one of the preceding claims, **characterized in that** the milled material is separated via sedimentation in a container filled with fluid, and that various milled material fractions are obtained at the bottom of the container in the form of sediment layers having more or less aleuron constituents based on varying sink times of the different milled material constituents in the fluid-filled container.

53. The method according to one of the preceding claims, **characterized in that** the milled material is separated by moving the milled material particles along an equipotential surface of an inhomogeneous electrical field, as a result of which the milled material jet or milled material stream is sorted into fractions exhibiting a higher or lower number of aleuron constituents due to the varying dielectric properties of the milled material particles.

54. The method according to claim 53, **characterized in that** the jet of milled material particles is moved on a defined path by a carrier fluid streaming in a laminar manner along an equipotential surface of the electrical field, and sorted by the inhomogeneous electrical field.

55. The method according to one of the preceding claims, **characterized in that** the milled material particles are electrostatically changed by rubbing against each other and/or a portion of a container and moved transverse to the electrical field, causing the milled material jet to become sorted into fractions exhibiting a higher or lower number of aleuron constituents owing to the different electrical properties of the milled material particles.

56. The method according to claim 55, **characterized in that** the jet of milled material particles is moved on a defined path by a carrier fluid streaming in a laminar manner transverse to the electrical field, and sorted by the electrical field.

57. The method according to one of the preceding claims, **characterized in that** separation takes place by a combination of separation steps described in claims 50 to 56.

58. The method according to one of the preceding claims, **characterized in that** the obtained milled material fractions are further treated with a biochemical substance specific to the respective fraction.

59. The method according to claim 58, **characterized in that** the biochemical substance has at least one of the enzymes betaglucanase, cellulase, xylanase and arabinase in an aqueous medium, with which the milled material fractions are mixed to form an aqueous mass.

60. The method according to claim 58, **characterized in that** the biochemical substance has at least one of the enzymes endoxylanase, beta-xylosidase, arabinofuranosidase, acetylesterase, xylanacetylesterase and feruloylesterase in an aqueous medium, with which the milled material fractions are mixed to form an aqueous mass.

61. Use of the aleuron constituents separated or isolated based on the method according to one of claims 1 to 60 as an additive in foodstuffs, feedstuffs, or as a food supplement or feed supplement.

62. The use according to claim 61, **characterized in that** the food supplement or feed supplement is a biscuit consisting of aleuron constituents and a nutritionally safe binder.

63. The use according to claim 61, **characterized in that** the admixture or food supplement or feed supplement is a beverage.

64. The use according to claim 61, **characterized in that** the admixture or food supplement or feed supplement is a powder.

65. The use according to claim 61, **characterized in that** the food is a starch-containing product.

66. The use according to claim 61, **characterized in that** the food is a dairy product.

67. Use of a sort of aleuron constituents isolated via specific microfiltration and/or specific centrifugation from the protoplasm of aleuron cells.

68. An aleuron-containing product containing the aleuron constituents separated or isolated according to one of claims 1 to 60.

69. The product according to claim 68, **characterized in that** it is present as a powdery aleuron concentrate.

70. The product according to claim 68, **characterized in that** it is present as an aleuron juice concentrate.

71. A functional food containing at least one component of the aleuron obtained according to one of claims 1 to 60.

72. The functional food according to claim 71, **characterized in that** it has enzymatically completely hydrolyzed aleuron cells.

73. The functional food according to claim 71 or 72, **characterized in that** it has enzymatically partially hydrolyzed aleuron cells.

74. The functional food according to claim 71 to 73, **characterized in that** it has fully intact aleuron cells.

## Revendications

1. Procédé de traitement du son, notamment du son de blé pour l'extraction d'aleurone, notamment du grain de blé, **caractérisé en ce qu'**on sépare dans le son les éléments d'aleurone contenant essentiellement de l'aleurone des non éléments d'aleurone ne contenant essentiellement pas d'aleurone ; et **en ce qu'**on trie ensuite les éléments contenant de l'aleurone.

2. Procédé selon la revendication 1, **caractérisé en ce qu'**on procède à la séparation des cellules d'aleurone et du son par processus enzymatique biochimique.

3. Procédé selon la revendication 2, **caractérisé en ce qu'**on conduit du son dans un réservoir rempli d'eau à une température et à une valeur pH optimales pour des enzymes, en rajoutant une substance biochimiquement active comportant des enzymes, pour que les forces d'adhésion entre la couche de cellules d'aleurone et l'enveloppe brune de la graine soit affaiblies par les enzymes, de façon à permettre la séparation intègre des assemblages de cellules d'aleurone et de l'enveloppe de la graine, grâce à un faible effet mécanique.

4. Procédé selon l'une quelconque des revendications 1 à 3, **caractérisé en ce qu'**on concasse préalablement le son (400 à 800 µm).

5. Procédé selon l'une quelconque des revendications 1 à 4, **caractérisé en ce qu'**on libère préalablement le grain de l'endosperme.

6. Procédé selon l'une quelconque des revendications 2 à 5, **caractérisé en ce qu'**on sépare de façon intègre les assemblages des cellules d'aleurones et l'enveloppe du grain sous un faible effet mécanique.

7. Procédé selon la revendication 6, **caractérisé en ce que** l'effet mécanique est assuré sous la forme de forces de cisaillement exercées sur le son.

8. Procédé selon la revendication 7, **caractérisé en ce qu'**on introduit le liquide dans lequel le son est conduit dans un moulin à colloïdes, qui applique les forces de cisaillement.

9. Procédé selon la revendication 7 ou 8, **caractérisé en ce que** l'effet mécanique sur le son est assuré à l'aide d'une extrudeuse.

10. Procédé selon l'une quelconque des revendications 3 à 9, **caractérisé en ce que** les parois des cellules d'aleurone sont au moins partiellement brisées par la substance biochimique, pour permettre aux matières contenues dans l'aleurone de s'extraire.

11. Procédé selon la revendication 10, **caractérisé en ce que** qu'on sépare entre eux ou on isole les uns des autres des éléments comportant essentiellement de l'aleurone et des éléments ne comportant essentiellement pas d'aleurone du son présent dans la masse aqueuse.

12. Procédé selon la revendication 11, **caractérisé en ce qu'**on presse la masse aqueuse à partir de son soumis à un traitement enzymatique, pour que des éléments d'aleurone dissous et en suspension dans la phase aqueuse soient emportés dans la phase aqueuse sous la forme de jus d'aleurone et que les éléments résiduels du son restent dans le tourteau séjournant dans la presse.

13. Procédé selon la revendication 11, **caractérisé en ce qu'**on filtre la masse aqueuse hors du son soumis à un traitement enzymatique, pour que des éléments d'aleurone dissous et en suspension dans la phase aqueuse soient emportés dans la phase aqueuse sous la forme de jus d'aleurone et que les éléments résiduels du son restent dans le filtre sous la forme de résidu de filtrage.

14. Procédé selon la revendication 11, **caractérisé en ce qu'**on sépare la masse aqueuse du son soumis à un traitement enzymatique par décantation en éléments d'aleurone et en éléments sans aleurone.

15. Procédé selon la revendication 11, **caractérisé en ce qu'**on sépare la masse aqueuse du son soumis à un traitement enzymatique sur la base de différences de mouillabilité dans deux liquides non miscibles en éléments d'aleurone et en éléments sans aleurone.

16. Procédé selon la revendication 11, **caractérisé en ce qu'**on sépare la masse aqueuse du son soumis à un traitement enzymatique sur la base de différences de solubilité dans deux liquides non miscibles en éléments d'aleurone et en éléments sans aleurone.

17. Procédé selon la revendication 11, **caractérisé en ce qu'**on procède à la séparation par association des étapes de séparation des revendications 12 à 16, des étapes de séparation identiques, tout comme des étapes de séparation différentes pouvant être assurées consécutivement sur la même masse aqueuse.

18. Procédé selon l'une quelconque des revendications 12 à 17, **caractérisé en ce qu'**on centrifuge le jus d'aleurone dans lequel les éléments d'aleurone sont entraînés, pour séparer entre eux ou pour isoler différents éléments d'aleurone.

19. Procédé selon l'une quelconque des revendications 12 à 18, **caractérisé en ce qu'**on filtre le jus d'aleurone dans lequel les éléments d'aleurone sont entraînés par microfiltration, pour séparer entre eux ou pour isoler certains éléments d'aleurone.

20. Procédé selon l'une quelconque des revendications 12 à 19, **caractérisé en ce qu'**on filtre le jus d'aleurone dans lequel les éléments d'aleurone sont entraînés par ultrafiltration, pour séparer entre eux ou pour isoler certains autres éléments d'aleurone.

21. Procédé selon l'une quelconque des revendications 12 à 20, **caractérisé en ce qu'**on soumet le jus d'aleurone dans lequel les éléments d'aleurone sont entraînés à une osmose inversée, pour séparer entre eux ou pour isoler encore certains autres éléments d'aleurone.

22. Procédé selon l'une quelconque des revendications 11 à 21, **caractérisé en ce qu'**on retire de l'eau du jus d'aleurone dans lequel les éléments d'aleurone sont entraînés, pour augmenter la concentration en éléments d'aleurone, pour obtenir un jus d'aleurone concentré.

23. Procédé selon la revendication 22, **caractérisé en ce qu'**on fabrique une poudre d'aleurone constituée d'éléments d'aleurone par séchage par pulvérisation, par lyophilisation ou par séchage à vide.

24. Procédé selon la revendication 22 ou 23, **caractérisé en ce qu'**avant la fabrication de la poudre d'aleurone, on procède à une préconcentration dans un vaporisateur.

25. Procédé selon l'une quelconque des revendications 13 à 24, **caractérisé en ce qu'**on procède à la sédimentation de protéines dissoutes dans le jus d'aleurone.

26. Procédé selon la revendication 25, **caractérisé en ce qu'**on procède à la sédimentation des protéines par échauffement du jus d'aleurone.

27. Procédé selon la revendication 25, **caractérisé en ce qu'**on procède à la sédimentation de protéines par relargage.

28. Procédé selon la revendication 25, **caractérisé en ce qu'**on procède à la sédimentation des protéines par une association des mesures selon la revendication 26 et/ou 27 et d'autres mesures pour la sédimentation des protéines.

29. Procédé selon l'une quelconque des revendications précédentes, **caractérisé en ce qu'**on pasteurise la masse aqueuse ou le jus d'aleurone contenant la substance biochimiquement active comportant les éléments d'aleurone et les enzymes, après une activité suffisamment longue des enzymes.

30. Procédé selon la revendication 1, **caractérisé en ce qu'**on procède à la séparation des cellules d'aleurone et du son par processus mécanique abrasif.

31. Procédé selon la revendication 30, **caractérisé en ce qu'**on procède à la séparation des éléments d'aleurone et des éléments sans aleurone dans broyeur à cylindres.

32. Procédé selon la revendication 1, **caractérisé en ce qu'**on procède à la séparation des cellules d'aleurone et du son en laissant agir généralement des fortes inertielles en évitant des contraintes par flexion sur les particules de son en paillettes.

33. Procédé selon la revendication 32, **caractérisé en ce qu'**on procède à la séparation des éléments d'aleurone et des éléments sans aleurone dans un broyeur à percussion centrifuge.

34. Procédé selon la revendication 32, **caractérisé en ce qu'**on procède à la séparation des éléments d'aleurone et des éléments sans aleurone dans un pulvérisateur à jet.

35. Procédé selon la revendication 1, **caractérisé en ce qu'**on procède à la séparation des éléments d'aleurone et des éléments sans aleurone par association d'étapes de séparation selon les revendications 31 à 34.

36. Procédé selon l'une quelconque des revendications 30 à 35, **caractérisé en ce qu'**on humidifie le son avant de le soumettre au traitement mécanique abrasif.

37. Procédé selon la revendication 30, **caractérisé en ce qu'**on amène le son dans de l'eau et **en ce qu'**on procède à la séparation des éléments d'aleurone et des éléments sans aleurone dans un moulin à colloïdes.

38. Procédé selon la revendication 30, **caractérisé en qu'**on amène le son dans de l'eau et en ce qu'on procède à la séparation des éléments d'aleurone et des éléments sans aleurone dans un broyeur à boulets.

39. Procédé selon la revendication 38, **caractérisé en ce qu'**on utilise des billes de matière plastique dans le broyeur à boulets.

40. Procédé selon la revendication 30 à 39, **caractérisé en ce qu'**on classe les éléments d'aleurone et les éléments sans aleurone qui ont été séparés et **en ce qu'**on le trie en fractions.

41. Procédé selon la revendication 40, **caractérisé en ce qu'**on procède au classement ou au tri par aéroséparateur.

42. Procédé selon la revendication 40, **caractérisé en ce qu'**on procède au classement ou au tri par aéroséparateur non engorgeable.

43. Procédé selon la revendication 40, **caractérisé en ce qu'**on procède au classement ou au tri par aéroséparateur à zigzag.

44. Procédé selon la revendication 40, **caractérisé en ce qu'**on procède au classement ou au tri par aéroséparateur à courant transversal.

45. Procédé selon la revendication 40, **caractérisé en ce qu'**on procède au classement ou au tri par association des aéroséparateurs selon les revendications 41 à 43.

46. Procédé selon l'une quelconque des revendications 40 ou 41, **caractérisé en ce qu'**on trie les fines particules récupérées de l'aéroséparateur, avant de les soumettre à un classement supplémentaire par tamisage.

47. Procédé selon l'une quelconque des revendications 46, **caractérisé en ce qu'**on utilise des tamis métalliques pour le tamisage.

48. Procédé selon l'une quelconque des revendications 41 à 47, **caractérisé en ce que** suite au classement ou au tri dans un aéroséparateur, on procède à une classement ou à un tri dans un champ électrique.

49. Procédé selon la revendication 42, **caractérisé en ce qu'**on l'utilise avec du son de blé et les différentes particules de la fraction grossière du son, contenant aussi bien des particules d'enveloppe sans aleurone émanant du sillon du grain de blé que des particules d'aleurone, étant chargées d'électricités et/ou polarisées par électricité de contact ou de différentes manières, par frottement mutuel entre les particules et/ou avec la paroi de la canalisation lors de leur passage à travers la canalisation cintrée, notamment circulaire de l'aéroséparateur non engorgeable et traversant une trajectoire à travers un espace traversé par un champ électrique, après leur sortie de l'aéroséparateur non engorgeable, suite à quoi des particules d'enveloppe sans aleurone issues du sillon s'accumulent en un premier endroit et les particules d'aleurone s'accumulent en un deuxième endroit, différent du premier endroit.

50. Procédé selon l'une quelconque des revendications précédentes, **caractérisé en ce que** la séparation de la matière broyée issue du son broyé est assurée par introduction simultanée de la matière broyée en un premier endroit dans un premier conduit vibrant incliné, dont l'inclinaison, la rugosité superficielle et la vibration sont conçues de façon à ce que les différents éléments de la matière broyée se déplacent dans le conduit à différentes vitesses de progression le long du conduit, ce qui permet d'obtenir en différents autres endroits dans le conduit au cours d'intervalles de temps consécutifs chaque fois différentes fractions de matière broyée avec une quantité plus ou moins élevée d'éléments d'aleurone.

51. Procédé selon l'une quelconque des revendications 1 à 50, **caractérisé en ce qu'**on procède à la séparation de la matière broyée issue du son broyé en introduisant simultanément la matière broyée en un premier endroit dans un conduit incliné vibrant, dont l'inclinaison, la rugosité superficielle et la vibration sont conçues de façon à ce que les éléments d'aleurone migrent vers l'extrémité supérieure du conduit, alors que les éléments sans aleurone migrent vers l'extrémité inférieure du conduit.

52. Procédé selon l'une quelconque des revendications précédentes, **caractérisé en ce qu'**on procède à la séparation de la matière broyée par sédimentation dans un réservoir rempli de fluide et **en ce que** du fait de différents temps de descente des différents éléments de la matière broyée dans le réservoir rempli d'eau, on obtient sur le fond du réservoir différentes fractions de matière broyée sous la forme de couches de sédiments comportant une quantité plus ou moins importante d'éléments d'aleurone.

53. Procédé selon l'une quelconque des revendications précédentes, **caractérisé en ce qu'**on procède à la séparation de la matière broyée en déplaçant les particules de matière broyée le long d'une surface équipotentielle d'un champ électrique non homogène, les différentes caractéristiques diélectriques des particules de la matière broyée provoquant une dispersion du jet de matière broyée ou du flux de matière broyée en fractions comportant une quantité plus ou moins importante d'éléments d'aleurone.

54. Procédé selon la revendication 53, **caractérisé en ce qu'**on déplace le jet de particules de matière broyée au moyen d'un fluide porteur s'écoulant de façon laminaire le long d'une surface équipotentielle du champ électrique sur une voie définie et **en ce qu'**il se disperse sous l'effet du champ électrique non homogène.

55. Procédé selon l'une quelconque des revendications précédentes, **caractérisé en ce qu'**on charge électrostatiquement les particules de matière broyée par frottement mutuel et/ou par frottement sur une partie du récipient et **en ce qu'**on les déplace à la transversale d'un champ électrique, les différentes caractéristiques électriques des particules de la matière broyée provoquant une dispersion du jet de matière broyée ou du flux de matière broyée en fractions comportant une quantité plus ou moins importante d'éléments d'aleurone.

56. Procédé selon la revendication 55, **caractérisé en ce qu'**on déplace le jet de particules de matière broyée au moyen d'un fluide porteur s'écoulant de façon laminaire sur une voie définie, à la transversale du champ électrique et **en ce qu'**il est dispersé par le champ électrique.

57. Procédé selon l'une quelconque des revendications précédentes, **caractérisé en ce qu'**on procède à la séparation par association d'étapes de séparation des revendications 50 à 56.

58. Procédé selon l'une quelconque des revendications précédentes, **caractérisé en ce qu'**on soumet les fraction de matière moulue obtenues à un traitement ultérieur avec une substance biochimique spécifique pour chaque fraction.

59. Procédé selon la revendication 58, **caractérisé en ce que** la substance biochimique comporte au moins l'un des enzymes bétaglucanase, cellulase, xylanase et arabinase dans un milieu aqueux, avec lequel on mélange les fractions de matière broyée en une masse aqueuse.

60. Procédé selon la revendication 58, **caractérisé en ce que** la substance biochimique comporte au moins l'un des enzymes endoxylanase, béta-xylosidase, arabinofuranosidase, acétyl-estérase, xylanacétyl-estérase et féruloyl-estérase dans un milieu aqueux, avec lequel on mélange les fractions de matière broyée en une masse aqueuse.

61. Utilisation des éléments d'aleurone séparés ou isolés par un procédé selon l'une quelconque des revendications 1 à 60 en tant qu'additif dans des produits alimentaires, des fourrages ou en tant que complément alimentaire ou que complément de fourrage.

62. Utilisation selon la revendication 61, **caractérisée en ce que** le complément alimentaire ou le complément de fourrage est une masse comprimée d'éléments d'aleurone et d'un liant neutre du point de vue physiologique alimentaire.

63. Utilisation selon la revendication 61, **caractérisé en ce que** l'additif ou le complément alimentaire ou le complément de fourrage est une boisson.

64. Utilisation selon la revendication 61, **caractérisé en ce que** l'additif ou le complément alimentaire ou le complément de fourrage est une poudre.

65. Utilisation selon la revendication 61, **caractérisé en ce que** le produit alimentaire est un produit contenant de l'amidon.

66. Utilisation selon la revendication 61, **caractérisé en ce que** le produit alimentaire est un produit laitier.

67. Utilisation d'une sorte d'éléments d'aleurone isolée par microfiltration et/ou par centrifugation spécifique du protoplasma de cellules d'aleurone.

68. Produit contenant de l'aleurone, contenant des éléments d'aleurone séparés ou isolés selon l'une quelconque des revendications 1 à 60.

69. Produit selon la revendication 68, **caractérisé en ce qu'**il se présente sous la forme d'un concentré d'aleurone pulvérulent.

70. Produit selon la revendication 68, **caractérisé en ce qu'**il se présente sous la forme d'un jus d'aleurone concentré.

71. Produit alimentaire fonctionnel, contenant au moins l'un des composants de l'aleurone obtenus selon l'une quelconque des revendications 1 à 60.

72. Produit alimentaire fonctionnel selon la revendication 71, **caractérisé en ce qu'**il comporte des cellules d'aleurone entièrement hydrolysées de façon enzymatique.

73. Produit alimentaire fonctionnel selon la revendication 71 ou 72, **caractérisé en ce qu'**il comporte des cellules d'aleurone partiellement hydrolysées de façon enzymatique.

74. Produit alimentaire fonctionnel selon la revendication 71 à 73, **caractérisé en ce qu'**il comporte des cellules d'aleurone entièrement intactes.
